# EUROPÄISCHE PATENTANMELDUNG

(11) **EP 1 764 682 A2**
(43) Veröffentlichungstag der Anmeldung: **21.03.2007**
(21) Anmeldenummer: 06018380.3
(22) Anmeldetag: 01.09.2006
(51) Int. Cl.: G06F 9/34, G06F 9/318

(54) **Verfahren zum Verarbeiten von Daten verschiedenen Datentyps in einer Prozessorarchitektur**

(30) Priorität: 01.09.2005 DE 10541672
(71) Anmelder: Micronas GmbH, 79108 Freiburg i. Br. (DE)
(72) Erfinder: Noeske, Carsten, 79350 Sexau (DE); Vierthaler, Matthias, 79211 Denzlingen (DE)
(74) Vertreter: Göhring, Robert

(57) **Zusammenfassung**

Prozessorarchitektur mit den Merkmalen:
- mindestens eine Arithmetik/Logik-Einheit (ALU-L, ALU-R),
- eine Daten-Speicheranordnung (RAM),
- eine Adressierungseinheit zum Bereitstellen von Zugriffsadressen (al, an, a0, sf) für die in der Daten-Speicheranordnung (RAM) gespeicherten oder zu speichernden Daten (d), wobei
- die Zugriffsadressen (al, an, a0, sf) aus Registern berechnet werden, in welchen eine Information über einen Typ der zu verarbeitenden Daten (d) gespeichert ist.

## Beschreibung

Die Erfindung bezieht sich auf eine Prozessorarchitektur und auf ein Verfahren zum Verarbeiten von Daten verschiedenen Datentyps in einer Prozessorarchitektur.

In Mikroprozessoren besteht oftmals die Anforderung Daten verschiedenen Datentyps laden, verarbeiten und speichern zu können. Für viele dieser Datentypen bestehen Konvertierungsvorschriften, die es erlauben den einen in einen anderen Datentyp umzuwandeln. Oftmals ist die Konvertierung in die eine Richtung ohne Verlust von Information oder Genauigkeit verbunden, während die Rückkonvertierung nicht verlustfrei möglich ist. Als Beispiel seien hier o.B.d.A. verschiedene Bitbreiten von ganzen Zahlen genannt, z.B. 8-, 16-, 32- und 64-bit.

Bei Laden in ein Rechenwerk oder Register erfolgt in vielen bestehenden Architekturen eine Konvertierung auf einen Datentyp, in den sich in der Regel alle Datentypen ohne Verlust von Information oder Genauigkeit konvertieren lassen. Im obigen Beispiel wäre das eine 64-bit Zahl. Während die Verarbeitung in der Regel auf diesem allgemeinen Datentyp erfolgt, muss bei der Speicherung wieder konvertiert werden, um eine effiziente Speichernutzung sicherzustellen.

Beim Laden und Speichern wird mittels einer Zugriffadresse eine Speicherzelle direkt oder indirekt über eine Speichereinrichtungsschnittstellte ausgewählt, in dem sich der gewünschte Wert befindet oder in welche der Wert abgespeichert werden soll. Oftmals entspricht die Bitbreite der Speicherzelle aber nicht der des kleinsten, sondern der des größten Datentyps, um letzteren schnellstmöglich laden zu können. Daher werden an die physikalisch benötigte Zugriffsadressen LSBs (least significant bits = Bits mit geringer Wertigkeit) angefügt, die Unterbereiche der Speicherzellen repräsentieren. In der Regel findet dann beim Laden und Speichern mittels einer Zusatzlogik eine Extraktion der Daten (Lesen) bzw. ein Schieben der Daten an die richtige Position (Schreiben) statt. Beim Schreiben kommt hinzu, dass die anderen Bits in einer Speicherzelle nicht überschrieben werden dürfen. Dieses wird in der Regel durch eine sogenannte Schreibmaske gelöst, in der nur die Bits auf logisch "1" gesetzt werden, die auch verändert werden sollen. Alternativ können auch viele Speicher mit der Größe der kleinsten Datentyps verwenden, an die die gleiche Zufriffsadresse und der entsprechende Teil des Datums angelegt wird und nur die benötigten Speicher mittels eines Schreib-Freigabe-Signals aktiviert werden. Dieses Ausführung soll im folgenden als äquivalent angesehen werden.

Im oben skizzierten Stand der Technik ist die Information im welchen Datentyp es sich beim Laden/Speichern handelt, im Instruktionswort, das den Ladevorgang steuert, enthalten bzw. kodiert. Die Instruktionsworten sind dabei derjenige Teil der Maschinensprache eines Prozessors, welcher angibt, um was für eine Art von Befehl, also z.B. Addition, Subtraktion oder Sprung, es sich handelt.

Nachteilig an diesem Verfahren ist es, dass die Kodierung in der Instruktion dieses und damit den benötigten Programmspeicher vergrößert bzw. bei fester Bitbreite der Instruktionswörter Bits belegt, die für die Kodierung anderer Steuerinformationen genutzt werden könnte.

Weiterhin ist nachteilig an dem bekannten Verfahren, dass der Algorithmus der die Datenverarbeitung beschreibt für jeden Datentyp explizit gespeichert werden muss. Auch dieses vergrößert den benötigten Programmspeicher. Zudem wird die erforderlich Assembler-Syntax weniger intuitiv, das Operationen, welche inhaltlich das Gleiche ausführen, mit Blick auf den jeweiligen konkreten Datentyp unterschiedlich beschrieben werden.

Bevor auf die Lösung der beschriebenen Problematik durch die Erfindung eingegangen wird, wird auf eine ähnliche Problemstellung in der Signalverarbeitung im Zusammenhang mit sogenannten SIMD-Prozessoren diskutiert.

In SIMD-Prozessoren (SIMD: Single Instruction / Multiple Data; einzelne Anweisung für mehrere Daten) werden im Rahmen der Signalverarbeitung oftmals gleiche Operationen mittels verschiedener paralleler Arithmetik/Logik-Einheiten auf verschiedenen Daten durchgeführt. Beispielsweise wird im Rahmen einer Bildverarbeitung eine IDCT-Transformation (IDCT: Inverse-Diskrete-Cosinus-Transformation) auf Blöcken eines Bildes im Rahmen einer MPEG-Videokodierung (MPEG: Moving-Picture-Experts-Group) durchgeführt. Um solche Operationen auf einem Prozessor zu beschleunigen, werden so genannte SIMD-Operationen definiert, deren Decodierung zur gleichen Operation auf mehreren Arithmetik/Logik-Einheiten (ALUs - Arithmetic/Logical Units) führt. Im Bereich der Audio-Verarbeitung werden zur Verarbeitung entsprechender Tondaten zunehmend sogenannte Dual-MAC-Einheiten (MAC: Multiply/ACcumulate; Multiplizier/Akkumulierer) verwendet. Dabei wird ausgenutzt, dass übliche Algorithmen für einen linken und einen rechten Kanal von Tondaten üblicherweise gleich sind und lediglich die individuellen Eingangsdaten verschieden sind.

Allgemein bekannt ist ein SIMD-Prozessor mit einer SIMD-Prozessorarchitektur, welche zumindest zwei Arithmetik/Logik-Einheiten zum Durchführen einer Datenverarbeitung, eine Daten-Speicheranordnung oder eine Speichereinrichtungs-Schnittstelle zu einer Speicheranordnung zum Speichern von Daten verschiedenen Datentyps, eine Adressierungseinheit zum Generieren von Zugriffsadressen für die in der Daten-Speicheranordnung zu speichernden Daten und eine Adress-Speicheranordnung zum Speichern der Zugriffs- bzw. Basisadressen aufweist. Verfahrensgemäß werden in einer solchen Prozessorarchitektur die Daten verschiedenen Datentyps unabhängig vom jeweiligen Datentyp in der Daten-Speicheranordnung gespeichert, wobei den Daten zum Speichern eine Zugriffsadresse für einen konkreten Speicherbereich in der Daten-Speicheranordnung zugeordnet wird. Zum Verarbeiten der Daten werden die Daten aus der Daten-Speicheranordnung abgerufen und einer der Arithmetik/Logik-Einheiten angelegt. Optimal kann eine Zwischenspeicherung der Daten in einem Register erfolgen, was in den folgenden Betrachtungen als äquivalent anzusehen ist.

Die Anzahl der verwendeten parallelen Einheiten bzw. die verwendete Bit-Breite der Operanden bei derartigen Prozessoren ist in den Instruktionsworten kodiert.

Beispielsweise kann in auf Bildverarbeitung ausgerichteten Prozessoren zwischen 4 × 8 Bit × 8 Bit, 2 × 16 Bit × 16 Bit oder 1 × 32 Bit × 32 Bit Verarbeitung gewählt werden. In der Audio-Signalverarbeitung können oftmals Dual-MAC-Instruktionen getriggert werden. Dies ist jedoch stets explizit aus dem Instruktionswort ersichtlich.

Damit ergeben sich auch in diesem Fall die oben beschriebenen Nachteile durch die Kodierung des Datentyps in der Instruktion.

Wie in den vorherigen Ausführungen deutlich wird, ist unter einem Datentyp nicht nur eine Information zu verstehen, ob es sich um ganzzahlige Daten oder Gleitdaten etc. als einem konkreten mathematischen Datentyp handelt, sondern zusätzlich oder alternativ auch eine Information, ob es sich im Fall von z.B. Tondaten um Stereodaten oder Monodaten handelt. Der Begriff "Datentyp" ist daher nicht nur im reinen mathematischen Sinn zu verstehen, sondern umfasst auch eine Zuordnung konkreter Daten zu bestimmen speziellen Anwendungszwecken der Daten. Unter dem Begriff Datentyp ist insbesondere auch eine Zuordnung zu verschiedenen verwendeten Bitbreiten zu verstehen.

Eine weitere Aufgabe der Erfindung besteht also darin, in einer SIMD-Prozessorarchitektur bzw. einem Verfahren zum Verarbeiten von Daten verschiedenen Datentyps die Handhabung von Daten verschiedenen Datentyps und deren Verteilung auf bzw. von den Recheneinheiten in einer SIMD-Prozessorarchitektur zu vereinfachen. Insbesondere sollen die Instruktionsworte vereinfacht werden und erreicht werden, dass ein Algortihmus Datentyp unabhängig in maschinensprache formuliert werden kann.

Diese Aufgabe wird gelöst durch eine Prozessorarchitektur mit den Merkmalen des Patentanspruchs 1 bzw. durch ein Verfahren zum Verarbeiten von Daten in einer Prozessorarchitektur mit den Merkmalen des Patentanspruchs 11. Vorteilhafte Ausgestaltungen sind Gegenstand abhängiger Ansprüche.

Bevorzugt wird demgemäss eine Prozessorarchitektur, insbesondere SIMD-Prozessorarchitektur, mit zumindest zwei Arithmetik/Logik-Einheiten zum Durchführen einer Datenverarbeitung, mit einer Daten-Speicheranordnung oder einer Speichereinrichtungs-Schnittstelle zu einer Speicheranordnung zum Speichern von Daten verschiedenen Datentyps, mit einer Adressierungseinheit zum Generieren von Zugriffsadressen für die in der Daten-Speicheranordnung zu speichernden Daten und mit einer Adress-Speicheranordnung zum Speichern der Zugriffsadressen, wobei die Zugriffsadressen mit dem jeweiligen Datentyp der Daten verknüpft sind und/oder
- eine Verteilung der Daten an die Arithmetik/Logik-Einheiten abhängig von den Zugriffsadressen ist und/oder
- eine Speicherung von Ausgangsdaten als den Daten abhängig von den Zugriffsadressen ist.

Vorteilhaft ist eine Prozessorarchitektur, bei der die Zugriffsadressen den Daten in der Adressierungseinheit und/oder in der Daten-Speicheranordnung abhängig von dem jeweiligen Datentyp der Daten zugeordnet sind.

Vorteilhaft ist eine Prozessorarchitektur, bei der die Zugriffsadressen eigentliche Speicher-Adresswerte umfassen, Basisadressen umfassen, aus denen eigentliche Speicher-Adresswerte bestimmbar sind, und/oder mit derartigen Adressen verknüpfte Zusatz-Informationen umfassen.

Unter einer Zugriffsadresse sind allgemein Adressen in einem weiten Sinn zu verstehen, welche zur Adressierung der in der Daten-Speicheranordnung zu speichernden bzw. gespeicherten Daten verwendbar sind. So fallen neben direkten eigentlichen Adresswerten, welche auf einen konkreten Speicherplatz verweisen, unter den Begriff Zugriffsadresse insbesondere auch Basisadressen, bei denen erst ein zusätzlicher Offset zu der eigentlichen Adresse bzw. eigentlichen Adresswerten führt.

Vorteilhaft ist eine Prozessorarchitektur mit einer Kopierlogik zum Kopieren der von der Daten-Speicheranordnung an einen Eingang einer der Arithmetik/Logik-Einheiten angelegten Daten auf einen Eingang der anderen der Arithmetik/Logik-Einheiten. Vorteilhaft ist eine Prozessorarchitektur, welche zum Verarbeiten der Daten in einer für einen bestimmten Datentyp geeigneten der Arithmetik/Logik-Einheiten mit einem vom Datentyp unabhängigen Instruktionssatz ausgebildet ist. Vorteilhaft ist eine Prozessorarchitektur, welche zum Definieren des Datentyps mittels Instruktionen vor einem Ansprung einer eigentlichen Routine zur Datenverarbeitung ausgebildet ist.

Vorteilhaft ist eine Prozessorarchitektur, bei welcher eine erste der Arithmetik/Logik-Einheiten zur Bearbeitung eines ersten Datentyps ausgebildet oder ausgelegt ist und eine zweite der Arithmetik/Logik-Einheiten zur Bearbeitung eines zweiten Datentyps ausgebildet oder ausgelegt ist und bei welcher eine Steuereinrichtung zum Zuweisen der Daten eines bestimmten Datentyps zu deren Datenverarbeitung zu der geeigneten der Arithmetik/Logik-Einheiten für den jeweiligen Datentyp abhängig von der Zugriffsadresse, abhängig von einem Bestandteil der Zugriffsadresse oder abhängig von einem Zusatz zur Zugriffsadresse ausgelegt oder ausgebildet ist. Bestandteil der Zugriffsadresse ist dabei insbesondere auch eine Information, welche im Umfeld z.B. einer Basisadresse zum Erzeugen eines zum letztendlichen Zugreifen auf die verwendeten Daten benutzten eigentlichen Adresswert bereitgestellt ist. Eine solche Information kann z.B. im Pointer-Register gespeichert sein, aus dem die eigentliche Basisadresse kommt, zu der mittels eines Offsets ein eigentlicher Adresswert berechnet wird. In einem solchen Fall ist eine solche Basisadresse nur von untergeordneter Bedeutung, da für die Zugriffsadresse die dieser zusätzlich zugeordnete Information als deren Bestandteil von Bedeutung ist. Die Grenzen zwischen einem Bestandteil der Zugriffsadresse und einem Zusatz sind insbesondere fließend anzusehen.

Vorteilhaft ist eine Prozessorarchitektur, bei welcher die Zugriffsadressen aus einer einheitlichen Speicheradresse, aus einer im Pointer-Register enthaltenen Information und/oder aus einer zusätzlichen Datentyp-Information ausgebildet sind. Vorteilhaft ist ein Prozessor mit einer solchen Prozessorarchitektur.

Bevorzugt wird demgemäss ein Verfahren zum Verarbeiten von Daten in einer Prozessorarchitektur, bei dem Daten verschiedenen Datentyps in eine Daten-Speicheranordnung gespeichert werden, wobei den Daten eine Zugriffsadresse für einen Speicherbereich der Daten-Speicheranordnung zugeordnet wird und zum Verarbeiten der Daten die Daten aus der Daten-Speicheranordnung abgerufen und zumindest einer Arithmetik/Logik-Einheit angelegt werden, wobei die Zuordnung der Zugriffsadresse zu den zu speichernden Daten abhängig von dem jeweiligen Datentyp der Daten durchgeführt wird und/oder die Zugriffsadressen mit dem jeweiligen Datentyp der Daten verknüpft werden und/oder eine Verteilung der Daten an die Arithmetik/Logik-Einheiten abhängig von den Zugriffsadressen durchgeführt wird und/oder eine Speicherung von Ausgangsdaten als den Daten abhängig von den Zugriffsadressen durchgeführt wird.

Vorteilhaft ist ein Verfahren, bei dem die von der Daten-Speicheranordnung an einen Eingang einer der Arithmetik/Logik-Einheiten angelegten Daten auf einen Eingang der anderen der Arithmetik/Logik-Einheiten kopiert werden. Vorteilhaft ist ein Verfahren, bei dem ein Instruktions-Code zum Verarbeiten der Daten in einer der Arithmetik/Logik-Einheiten unabhängig vom Datentyp der Daten codiert wird.

Vorteilhaft ist ein Verfahren, bei dem die Daten abhängig von der Zugriffsadresse, abhängig von einem Bestandteil der Zugriffsadresse oder abhängig von einem Zusatz zur Zugriffsadresse einer bestimmten der Arithmetik/Logik-Einheiten angelegt werden, wobei die bestimmte der Arithmetik/Logik-Einheiten zur Verarbeitung des jeweiligen Datentyps der Daten verwendet wird.

Vorteilhaft ist ein Verfahren, bei dem die Zugriffsadressen aus einer eigentlichen Speicheradresse und/oder aus einer zusätzlichen Datentyp-Information als erweiterter Zugriffsadresse ausgebildet werden. Vorteilhaft ist ein Verfahren, bei dem im Instruktions-Code zum Zuordnen der Daten zu bestimmten Arithmetik/Logik-Einheiten keine vom Datentyp abhängige Zuordnungs-Anweisungsanteile enthalten sind.

Vorteilhaft ist ein Verfahren zum Betreiben einer solchen Prozessorarchitektur oder zum Betreiben eines solchen Prozessors.

Im Rahmen der bevorzugten SIMD-Prozessorarchitektur bzw. des bevorzugten Verfahrens zum Verarbeiten von Daten wird entsprechend eine Information bezüglich des zu verarbeitenden speziellen Datentyps der Daten nicht in einer Instruktion zur späteren Verarbeitung der Daten sondern im Umfeld des Datums bzw. der Zugriffsadresse für die Daten-Speicheranordnung, ,in welcher die Daten verschiedenen Datentyps gespeichert sind, gespeichert. Das Speichern der Datentyp-Information in Verbindung mit der Zugriffsadresse ist insbesondere bei Arrays (Datenfeldern) des gleichen Datentyps sehr effizient. Entsprechend wird die Information bezüglich des Datentyps in der Adressierungs-Einheit beim Aufsetzen des Pointer-Registers gespeichert. Beim Laden eines oder mehrerer Daten mit dem entsprechenden und ggfs. noch zu verarbeitenden Pointer als einer Grundform einer Zugriffsadresse oder z.B. einem Bestandteil der Zugriffsadresse in Form einer Basisadresse zum Ausbilden einer konkreten Zugriffsadresse für einen eigentlichen Adresswert, kann die zugeordnete Hardware entsprechend erkennen, welchen Datentyps das Datum bzw. die zu speichernden Daten sind und kann die Elemente bzw. Daten entsprechend extrahieren und auf geeignete arithmetische Einheiten aufteilen. Die Erkennung erfolgt dabei in vorteilhafter Weise anhand einer Zugriffsadresse vor der Berechnung eines konkreten Adresswertes innerhalb der Daten-Speicheranordnung. Vorzugsweise können dabei arithmetisch/logische Einheiten verwendet werden, welche mit fester Wortbreite arbeiten.

In vorteilhafter Weise kann eine automatische Konvertierung der Daten ineinander direkt beim Laden der Daten oder beim Ausführen bei den konkreten Instruktionen stattfinden, obwohl die jeweils codierte Instruktion für verschiedene Datentypen exakt die gleiche ist. Entsprechend wird die Programmierung einer Vielzahl nahezu gleicher Instruktionen bzw. Instruktions-Abfolgen für verschiedene Datentypen entbehrlich, da die Zuordnung der gespeicherten Daten auf spezielle arithmetisch/logische Einheiten abhängig von der Zugriffsadresse in der Speicheranordnung vorgenommen wird.

Ein weiterer Vorteil besteht in der effizienten Ausnutzung des Speichers durch eine Adressierung der kleinsten Einheit, obwohl die Speicher-Bit-Breite der eines multiplen Datenwortes entspricht. Beim Zugriff auf weniger Werte als möglich, werden durch eine Steuerlogik die geladenen Werte auf die Eingänge der für die Prozessierung nicht benötigten Einheiten kopiert, wodurch eine Datenkonsistenz erreicht wird.

Durch die bevorzugte Prozessorarchitektur ist es vorteilhaft möglich, den Algorithmus bzw. einen entsprechenden Instruktions-Code unabhängig davon, wie viele Kanäle verarbeitet werden, in Instruktionsworten zu codieren und damit alle oder einen Teil der Kanäle gleichzeitig zu bearbeiten. Dabei kann auf Zwischenergebnisse der parallel ablaufenden Kanäle zugegriffen werden.

Ein Ausführungsbeispiel wird nachfolgend anhand der Zeichnung näher erläutert. Es zeigen:
- Fig. 1: eine beispielhafte Anordnung von einzelnen Komponenten einer SIMD-Prozessorarchitektur zur Speicherung und Verarbeitung von Daten verschiedenen Datentyps und
- Fig. 2: eine Tabelle mit beispielhaften Zuordnungsmöglichkeiten spezieller Daten zu verschiedenen Komponenten und Verarbeitungsschritten in einer solchen SIMD-Prozessorarchitektur.

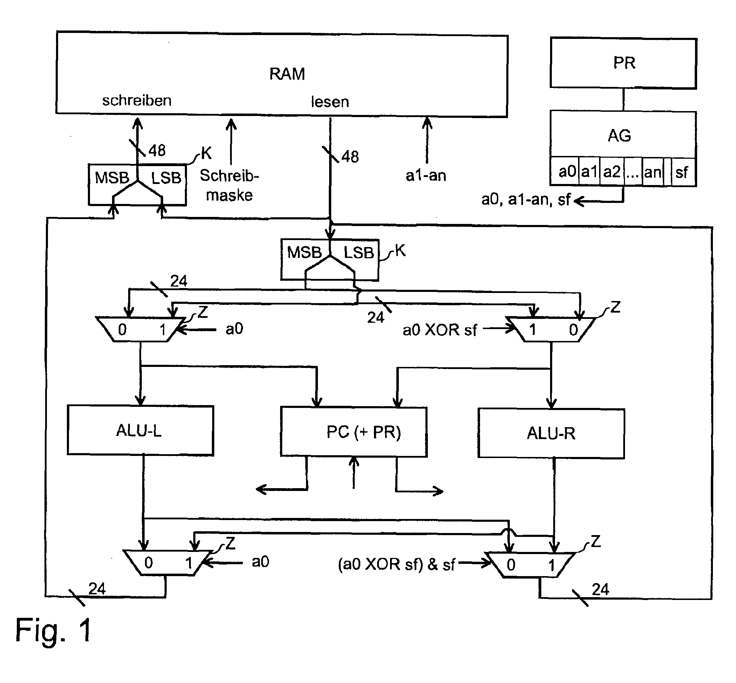

Fig.1 zeigt lediglich einzelne Komponenten einer Vielzahl üblicherweise vorhandener Komponenten einer SIMD-Prozessorarchitektur, worunter auch eine SIMD-fähige Prozessorarchitektur zu verstehen ist.

Als eine Daten-Speichereinrichtung RAM ist ein typischerweise in einer Prozessorarchitektur eingebundener oder über eine entsprechende Speichereinrichtungs-Schnittstelle angeschlossener Direktzugriffsspeicher dargestellt. Diese Daten-Speicheranordnung RAM dient zum Speichern von Daten d, welche in der Prozessorarchitektur zu verarbeiten sind, kann ggfs. aber auch weitere Daten, Programmcode etc. speichern. Die Daten d werden üblicherweise unter Verwendung von Daten- und Adress-Bussen sowie einer Schreibmaske an der Daten-Speicheranordnung RAM angelegt und in dieser abgespeichert. Zum Speichern der Daten d in der Daten-Speicheranordnung RAM kann auch eine übergeordnete Speicheranordnung mit einer speziellen Daten-Speicheranordnung als einem Unterbereich in dieser ausgebildet sein. Die Schreibmaske dient zum sicherstellen, z.B. mono-Daten zu schreiben ohne dabei einen benachbarten Wert zu überschreiben. Alternativ zum dargestellten Szenario können z.B. auch zwei Direktzugriffsspeicher, z.B. eines für gerade Adressen und eines für ungerade Adressen, verwendet werden, wobei dann mittels eines Schreib-Freigabe-Signals, welches jeder Direktzugriffsspeicher hat, eine entsprechende Ansteuerung vorgenommen wird.

Wenn die Daten d in der Daten-Speicheranordnung RAM abzuspeichern sind, werden diese an konkret zugewiesenen Speicheradressen innerhalb der Daten-Speicheranordnung RAM gespeichert. Die Zuordnung der Daten d zu einer speziellen Speicheradresse erfolgt über eine Adressierungseinheit AG, welche als eigenständige Komponente oder als Bestandteil eines Prozessorkerns PC ausgebildet sein kann. Die Adressierungseinheit AG ordnet den Daten d jeweils einen so genannten Pointer, ggfs. mit einem Offset als einer Zugriffsadresse a1-an, a0, sf zu, unter welcher die Daten d in der Daten-Speicheranordnung RAM an einer konkret zugewiesenen Speicheradresse gespeichert werden. Die Zugriffsadressen a1-an, a0, sf oder ggfs. Basisadressen als direkter oder indirekter Bestandteil der Zugriffsadressen werden in einem Pointer- bzw. Zugriffsadressregister PR hinterlegt, welches insbesondere eigenständig, als Bestandteil des Prozessorkerns PC oder als Bestandteil der Adressierungseinheit AG ausgebildet sein kann. Sofern im Zugriffsadressregister PR hinterlegte Anteile oder Zusatzinformationen sf im Adressregister nicht zu verarbeiten sind, können sie optional auch direkt aus dem Zugriffsadressregister PR heraus und an der Adressierungseinheit vorbei oder durch diese hindurch geführt werden.

Gemäß der bevorzugten Ausführungsform wird durch die Adressierungseinheit AG eine Bestimmung des Datentyps der jeweils zu speichernden Daten d durchgeführt. Abhängig von dem Datentyp der Daten d wird eine Zugriffsadresse a1-an, a0, sf gebildet. Gemäß einer ersten Variante liegt die jeweilige Zugriffsadresse a1-an, a0 in einem Speicherbereich der Daten-Speicheranordnung RAM, welcher für den speziellen Datentyp der momentan zu speichernden Daten d bereitgestellt ist.

Vorteilhaft ist z.B. eine Verarbeitung von mono-Audio-Daten möglich. Die Zugriffsadressen a1-an adressieren Zellen in einem Speicherbereich der Daten-Speicheranordnung RAM mit einer mono-Samplegröße von z.B. 24 Bit. Die Daten-Speicheranordnung RAM hat jedoch z.B. 48 Bit. Die zusätzliche Adresse a0 der Zugriffsadresse wird nicht an die Daten-Speicheranordnung RAM angelegt sondern dazu verwendet, 24-Bit-Daten als ALU-Eingabeoder ALU-Ausgabedaten (ALU: Arithmetik/Logik) an die richtige Position in einem hohem oder niedrigen Teil des entsprechenden 48-Bit Wortes zu schieben bzw. daraus zu extrahieren, was einer entsprechenden Zuordnung zu niederwertigen oder höherwertigen Bit des Adresswortes entspricht. Der Programmierer bzw. Prozessor sieht somit eine 24-Bit-Daten-Speicheranordnung RAM. Diesbezüglich können die nachfolgenden erläuternden Überlegungen betrachtet werden: Zweier Arithmetik/Logik-Einheiten ALU-L, ALU-R ohne Eingangs- und Ausgangsmultiplexer Z, d.h. ohne den zusätzlichen Adresswert a0 und eine Zusatz-Information sf als eigenständig der Zugriffsadresse zugeordnetem Bestandteil, würde ein reiner Stereo-Prozessor gebildet, der keine Mono-Verarbeitung durchführen könnte und auch keine Möglichkeit hätte, den linken auf den rechten Kanal mit entsprechenden Audio-Daten zu addieren bzw. einen Kanal in eine andere als die dafür vorgesehene Arithmetik/Logik-Einheit ALU-L, ALU-R zu schieben. Mit Eingangsmultiplexern ohne eine Verarbeitung "a0 or sf" könnte ein so ausgebildeter Prozessor die Kanäle verdreht bzw. vertauscht in die Arithmetik/Logik-Einheiten ALU-L, ALU-R schieben und z.B. mit Addition der Werte und anschließender Division durch 2 ein Mono-Signal berechnen. Dieses müsste aber immer noch als Stereosignal gespeichert werden. Durch die Berücksichtigung des zusätzlichen Adresswerts a0 und der Zusatz-Information sf im Rahmen einer Ausschließlich-Oder-Verknüpfung (XOR) wird auch der Datentyp korrekt berücksichtigt. Es wird wieder ein Mono-Zustand erzeugt und eine automatische Konvertierung durchgeführt. Aus Mono-Daten bzw. einem Mono-Zustand kann ein Stereo-Zustand erzeugt werden und trotzdem ein Mono-Zustand abgespeichert werden ohne dabei das benachbarte Signal zu überschreiben. Zur Umsetzung wird insbesondere auch eine Schreibmaske der Daten-Speicheranordnung RAM entsprechend eingesetzt.

Gemäß einer dazu zusätzlich oder alternativ umsetzbaren Variante wird eine erweiterte Zugriffsadresse a1 - an, a0,sf verwendet, welche zusätzlich zu der üblichen Adressierungsinformation eines oder mehrere weitere Bit a0, sf aufweist, welche zur Beschreibung des Datentyps dienen.

Dies ermöglicht bei späteren Zugriffen durch einen Instruktions-Code auf die gespeicherten Daten d, die gespeicherten Daten d abzurufen und die Daten d aufgrund der mit der Zugriffsadresse a1 - an, a0,sf direkten Datentyp-Verknüpfung direkt einer entsprechend geeigneten Arithmetik/Logik-Einheit ALU-L, ALU-R anzulegen. Die Verwendung spezieller Instruktions-Code für Daten verschiedenen Datentyps und eine Analyse des Datentyps durch einen Prozessorkern PC vor der Zuordnung zu einer Arithmetik/Logik-Einheit ALU-L, ALU-R kann somit entfallen.

Bei der lediglich beispielhaften Ausführungsform werden gespeicherte Daten d aus der Daten-Speicheranordnung RAM einer Verteilungs- und Kopierlogik K angelegt, welche die Daten über Zuordnungseinheiten Z der ersten und der zweiten Arithmetik/Logik-Einheit ALU-L, ALU-R anlegt. Außerdem werden die Daten d von den Zuordnungseinheiten Z dem Prozessorkern PC, welcher vorzugsweise das Zugriffsadressregister PR mit den Zugriffsadressen umfasst, angelegt. Die Zuordnung in den Zuordnungseinheiten Z erfolgt dabei anhand eines für die Daten d jeweils zugeordneten Datentyp-Bits als einer Datentyp-Information a0, sf der Zugriffsadressen a1 - an, a0, sf, welche an den Zuordnungseinheiten Z angelegt wird. Insbesondere können bei Vorliegen verschiedener Datentyp-Informationen a0, sf diese auch mittels einer Ausschließlich-Oder-Verknüpfung (a0 XOR sf) zugeordnet werden.

Mittels weiterer Zuordnungseinheiten Z und einer weiteren Verteilungs- und Kopierlogik K werden von den Arithmetik/Logik-Einheiten ALU-L, ALU-R entsprechend verarbeitete und ausgegebene Daten d wiederum entsprechend der diesen zugeordneten Datentyp-Informationen a0, a0 XOR sf kombiniert und der Daten-Speicheranordnung RAM zur weiteren Speicherung an den ursprünglichen Speicheradressen oder an einer neuen Speicheradresse angelegt.

Bei dem dargestellten Ausführungsbeispiel handelt es sich um eine Prozessorarchitektur zur Verarbeitung von Ton-Daten, welche einem linken bzw. einem rechten Kanal zugeordnet werden. Dies ermöglicht eine vorteilhafte Aufteilung in niederwertige Bits LSB und in höherwertige Bits MSB der Bits eines jeweiligen individuellen Datenworts der Daten d, welche aus der Daten-Speicheranordnung RAM abgerufen werden. Mittels der Verteilungs- und Kopierlogik K erfolgt die Aufteilung auf die beiden ersten Zuordnungseinheiten Z, wobei jeder der Zuordnungseinheiten Z an einem ersten Eingang die höchstwertigen Bit MSB und an einem zweiten Eingang die niederwertigsten BIT LSB angelegt werden. Abhängig von der Datentyp-Information a0 und gegebenenfalls einer Stereo- bzw. Mono-Information in Form eines weiteren Zugriffsadress-Bit oder eines individuellen und der Zugriffsadresse a1-an, a0 zugeordneten Flag sf erfolgt dann die Zuordnung auf die beiden Arithmetik/Logik-Einheiten ALU-L, ALU-R. Im Falle eines aus einem Stereo-Signal zu erzeugenden Monosignals kann dabei durch die Zuordnungseinheiten bereits eine Addition der jeweiligen Daten vorteilhaft umgesetzt werden.

Entsprechend findet in einem für Audiosignale optimierten Signal-Prozessor mit einer solchen SIMD-Prozessorarchitektur im Audiobereich eine Unterscheidung zwischen einem Monosignal, beispielsweise von einem Mikrofon-Eingang, einem Stereosignal, beispielsweise Musik eines Tonträgers, und einem Multikanal-Signal, beispielsweise einem 5.1-Heimkino-Ton, statt. Alle diese Signale bzw. die individuellen Datenworte und Daten d, welche solche Signale ausbilden, können üblicherweise durch eine solche Prozessorarchitektur gemischt und verarbeitet werden. Die Verarbeitung erfolgt in der Regel in Signalprozessoren, wobei insbesondere im Fall einer PCM-Basisband-Verarbeitung (PCM: Pulse-Code-Modulation) oftmals der Algorithmus für alle Kanäle bzw. Daten d verschiedenen Datentyps der gleiche ist.

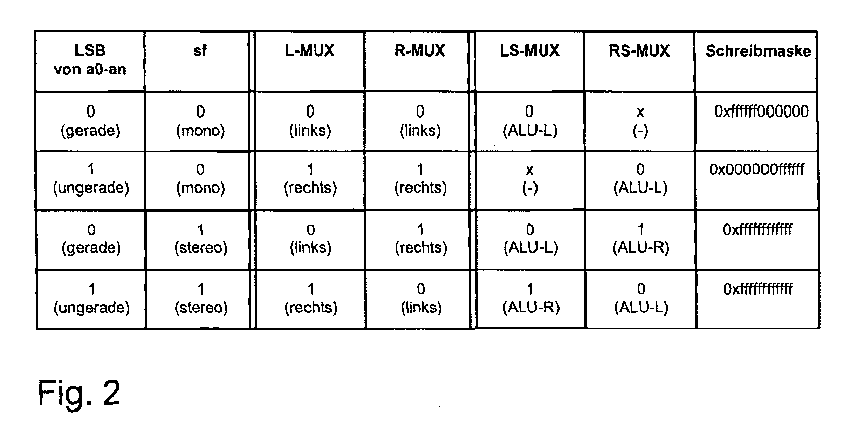

Bei dem gemäß Fig.1 dargestellten Beispiel mit lediglich zwei Arithmetik/Logik-Einheiten ALU-L, ALU-R werden abhängig von einer Mono- oder Stereo-Eigenschaft als Datentyp-Information in Verbindung mit dem Abrufen der Daten d aus der Daten-Speicheranordnung RAM vier Möglichkeiten geboten, welche anhand der Tabelle in Fig. 2 bzgl. Schaltoptionen veranschaulicht sind. Gemäß einer ersten Möglichkeit kann ein Mono-Wert von einem geraden Adresswert der Zugriffsadresse in beide Arithmetik/Logik-Einheiten ALU-L, ALU-R geladen werden. Gemäß einer zweiten Möglichkeit kann ein Mono-Wert von einem ungeraden Adresswert der Zugriffsadresse in beide Arithmetik/Logik-Einheiten ALU-L, ALU-R geladen werden. Gemäß einer dritten Möglichkeit wird ein Stereo-Wert der Daten d in beide Arithmetik/Logik-Einheiten ALU-L, ALU-R geladen, wobei der Adresswert der Zugriffsadresse gerade ist. Gemäß einer vierten Möglichkeit wird ein Stereo-Wert der Daten d mit einer Links/Rechts-Vertauschung in beide Arithmetik/Logik-Einheiten ALU-L, ALU-R geladen, wobei der Adresswert der Zugriffsadresse ungerade ist. Bei diesem konkreten Beispiel wird somit eine beispielhafte Zuordnung der Datentyp-Information a0, sf bei der Zuweisung auf Zugriffsadressen a1-an derart vorgenommen, dass zwischen einerseits geraden Zugriffsadressen und andererseits ungeraden Zugriffsadressen beim Speichern der Daten d geachtet wird.

Die Art des Zugriffs abhängig vom Datentyp Mono oder vom Datentyp Stereo wird z.B. in einer Ladeinstruktion für das verwendete Zugriffsadressregister PR codiert. Die Codierung findet statt, bevor die eigentliche Routine für die Zuweisung zu den Arithmetik/Logik-Einheiten ALU-L, ALU-R durchgeführt wird, welche den Algorithmus ausführt.

Allgemein ermöglicht eine solche Prozessorarchitektur bzw. ein solches Verfahren zur Verarbeitung und Zuweisung von Daten in einer solchen Prozessorarchitektur gleiche Instruktions-Code vom Datentyp abhängig unterschiedlich auszuführen. Der Datentyp wird durch einen in Zusammenhang mit dem Datum bzw. den individuellen zu speichernden Daten oder im Zusammenhang mit der Speicheradresse bzw. einer Zugriffsadresse der Daten in der Daten-Speicheranordnung RAM gespeicherten Information als Datentyp-Information festgelegt.

Vorteilhafter Weise kann sich der Datentyp dabei durch die Anzahl der parallel prozessierten Daten-Abtastwerte unterscheiden. Der Datentyp kann auch durch die Bit-Breite eines Datenwortes solcher Daten d unterschieden werden. In vorteilhafter Weise kann eine Zugriffsadresse a1-an, a0, sf für die Daten abhängig von den niederwertigen bzw. abhängig von den höherwertigen Bits LSB, MSB der Zugriffsadresse a1-an, a0, sf unterschiedlich den speziellen Recheneinheiten in Form der Arithmetik/Logik-Einheiten ALU-L, ALU-R zugeordnet werden. In vorteilhafter Weise können die Daten d in unterschiedlichen Anordnungen von den Recheneinheiten abhängig von den niederwertigen oder den höherwertigen Bits LSB, MSB der Adresse in die Daten-Speicheranordnung RAM geschrieben werden.

Allgemein können anstelle einer Daten-Speicheranordnung in Art eines Direktzugriffsspeichers auch Register oder sonstige Typen von Speichern verwendet werden. In vorteilhafter Weise kann die Markierung der Daten d in Form einer Datentyp-Information a0, sf, welche mit Zugriffsadressen a1-an, a0, sf verknüpft wird oder in Form der Zugriffsadressen in diese codiert wird, auch im Umfeld eines Registers oder einer sonstigen Speicheranordnung durchgeführt werden.

Fig. 2 zeigt die beispielhafte Tabelle mit verschiedenen Kombinationsmöglichkeiten für eine Zuordnung im Falle von Tonsignaldaten für eine Zuordnung von Daten d zu speziellen Zugriffsadressen. Gemäß einer ersten Spalte wird unterschieden, ob ein niederwertiges Bit LSB der Zugriffsadresse a0-an gerade oder ungerade ist. Gemäß einer zweiten Spalte wird unterschieden, ob in der Zugriffsadresse a0-an ein Stereo-Flag sf gesetzt ist, um zwischen Mono- und Stereo-Signalen zu unterscheiden. Abhängig davon erfolgt eine Zuordnung mittels der Zuordnungseinheiten Z in Art eines Multiplex-Vorganges von Daten d aus der Daten-Speicheranordnung RAM auf die erste Arithmetik/Logik-Einheit ALU-L für einen linken Tonkanal bzw. auf die zweite Arithmetik/Logik-Einheiten ALU-R für einen rechten Tonkanal oder auf beide gemäß Spalten 3 und 4.

Daten d, die aus den Arithmetik/Logik-Einheit ALU-L, ALU-R verarbeitet und ausgegeben werden, werden in der Daten-Speicheranordnung RAM mittels der weiteren Zuordnungseinheiten Z und einer weiteren Kombinationseinheit K gespeichert. Die weitere Kombinationseinheit K dient zum Kombinieren von Daten bzw. Adressen der ersten Zuordnungseinheit Z, welche den Arithmetik/Logik-Einheiten nachgeschaltet ist und höherwertige Bits MSB liefert, und von Daten bzw. Adressen von der zweiten Zuordnungseinheit Z, welche den Arithmetik/Logik-Einheiten nachgeschaltet ist und niederwertige Bits LSB liefert. Eine entsprechende Speicherung in der Daten-Speicheranordnung RAM erfolgt entsprechend gemäß Spalte 5 bzw. 6 für die höherwertigen bzw. niederwertigen Bits MSB, LSB, wobei bei bestimmten Optionen x auch eine vollständige Unterdrückung der Speicherung durchgeführt wird.

## Patentansprüche

1. Prozessorarchitektur mit den Merkmalen:
- mindestens eine Arithmetik/Logik-Einheit (ALU-L, ALU-R),
- eine Daten-Speicheranordnung (RAM),
- eine Adressierungseinheit zum Bereitstellen von Zugriffsadressen (a1, an, a0, sf) für die in der Daten-Speicheranordnung (RAM) gespeicherten oder zu speichernden Daten (d), wobei
- die Zugriffsadressen (a1, an, a0, sf) aus Registern berechnet werden, in welchen eine Information über einen Typ der zu verarbeitenden Daten (d) gespeichert ist.

2. Prozessorarchitektur nach Anspruch 1 **gekennzeichnet durch** die weiteren Merkmale:
- zumindest zwei Arithmetik/Logik-Einheiten (ALU-L, ALU-R) zum Durchführen einer Datenverarbeitung,
- einer Daten-Speicheranordnung (RAM) oder einer Speichereinrichtungs-Schnittstelle zu einer Speicheranordnung zum Speichern von Daten (d) verschiedenen Datentyps,
- einer Adressierungseinheit (AG) zum Generieren von Zugriffsadressen für die in der Daten-Speicheranordnung (RAM) zu speichernden Daten (d) und
- einer Adress-Speicheranordnung (PR) zum Speichern der Zugriffsadressen,
- die Zugriffsadressen (a1, an, a0, sf) sind mit dem jeweiligen Datentyp der Daten (d) verknüpft sind und/oder
- eine Verteilung der Daten (d) an die Arithmetik/Logik-Einheiten (ALU-L, ALU-R) abhängig von den Zugriffsadressen (a1, an, a0, sf) ist und/oder
- eine Speicherung von Ausgangsdaten als den Daten (d) abhängig von den Zugriffsadressen (a1, an, a0, sf) ist.

3. Prozessorarchitektur nach Anspruch 1 oder 2, bei der die Zugriffsadressen (a1, an, a0, sf) den Daten (d) in der Adressierungseinheit (AG) und/oder in der Daten-Speicheranordnung (RAM) abhängig von dem jeweiligen Datentyp der Daten (d) zugeordnet sind.

4. Prozessorarchitektur nach einem der Ansprüche 1 bis 3, bei der die Zugriffsadressen (a1, an, a0, sf) eigentliche Speicher-Adresswerte umfassen, Basisadressen umfassen, aus denen eigentliche Speicher-Adresswerte bestimmbar sind, und/oder mit derartigen Adressen verknüpfte Zusatz-Informationen (a0, sf) umfassen.

5. Prozessorarchitektur nach einem vorstehenden Anspruch, mit einer Kopierlogik (K) zum Kopieren der von der Daten-Speicheranordnung (RAM) an einen Eingang einer der Arithmetik/Logik-Einheiten (ALU-R; ALU-L) angelegten Daten (d) auf einen Eingang der anderen der Arithmetik/Logik-Einheiten (ALU-L; ALU-R).

6. Prozessorarchitektur nach einem vorstehenden Anspruch, welche zum Verarbeiten der Daten in einer für einen bestimmten Datentyp geeigneten der Arithmetik/Logik-Einheiten (ALU-L, ALU-R) mit einem vom Datentyp unabhängigen Instruktionssatz ausgebildet ist.

7. Prozessorarchitektur, welche zum Definieren des Datentyps mittels Instruktionen vor einem Ansprung einer eigentlichen Routine zur Datenverarbeitung ausgebildet ist.

8. Prozessorarchitektur nach einem vorstehenden Anspruch, bei welcher
- eine erste der Arithmetik/Logik-Einheiten (ALU-L) zur Bearbeitung eines ersten Datentyps ausgebildet oder ausgelegt ist und eine zweite der Arithmetik/Logik-Einheiten (ALU-R) zur Bearbeitung eines zweiten Datentyps ausgebildet oder ausgelegt ist und
- eine Steuereinrichtung (PC) zum Zuweisen der Daten (d) eines bestimmten Datentyps zu deren Datenverarbeitung zu der geeigneten der Arithmetik/Logik-Einheiten (ALU-L oder ALU-R) für den jeweiligen Datentyp abhängig von der Zugriffsadresse (a1-an), abhängig von einem Bestandteil der Zugriffsadresse (a0, sf) oder abhängig von einem Zusatz zur Zugriffsadresse (sf) ausgelegt oder ausgebildet ist.

9. Prozessorarchitektur nach einem vorstehenden Anspruch, bei welcher die Zugriffsadressen aus einer einheitlichen Speicheradresse (a1 - an), aus einer im Pointer-Register enthaltenen Information und/oder aus einer zusätzlichen Datentyp-Information (a0, sf) ausgebildet sind.

10. Prozessor mit einer Prozessorarchitektur nach einem vorstehenden Anspruch.

11. Verfahren zum Verarbeiten von Daten in einer Prozessorarchitektur, bei dem
- Daten (d) verschiedenen Datentyps in eine Daten-Speicheranordnung (RAM) gespeichert werden, wobei den Daten (d) eine Zugriffsadresse für einen Speicherbereich der Daten-Speicheranordnung zugeordnet wird und
- zum Verarbeiten der Daten (d) die Daten (d) aus der Daten-Speicheranordnung (RAM) abgerufen und zumindest einer Arithmetik/Logik-Einheit (ALU-L, ALU-R) angelegt werden,
**dadurch gekennzeichnet, dass**
die Zugriffsadressen (a1, an, a0, sf) aus Registern berechnet werden, in welchen eine Information über ein Typ der zu verarbeitenden Daten (d) gespeichert ist.

12. Verfahren nach Anspruch 12,
**dadurch gekennzeichnet, dass**
- die Zuordnung der Zugriffsadresse (a1 - an, a0, sf) zu den zu speichernden Daten (d) abhängig von dem jeweiligen Datentyp der Daten (b) durchgeführt wird und/oder
- die Zugriffsadressen (a1, an, a0, sf) mit dem jeweiligen Datentyp der Daten (d) verknüpft werden und/oder
- eine Verteilung der Daten (d) an die Arithmetik/Logik-Einheiten (ALU-L, ALU-R) abhängig von den Zugriffsadressen (a1, an, a0, sf) durchgeführt wird und/oder
- eine Speicherung von Ausgangsdaten als den Daten (d) abhängig von den Zugriffsadressen (a1, an, a0, sf) durchgeführt wird.

13. Verfahren nach Anspruch 11 oder 12, bei dem die von der Daten-Speicheranordnung (RAM) an einen Eingang einer der Arithmetik/Logik-Einheiten (ALU-L; ALU-R) angelegten Daten auf einen Eingang der anderen der Arithmetik/Logik-Einheiten (ALU-R; ALU-L) kopiert werden.

14. Verfahren nach Anspruch 11 oder 13, bei dem ein Instruktions-Code zum Verarbeiten der Daten (d) in einer der Arithmetik/Logik-Einheiten (ALU-L, ALU-R) unabhängig vom Datentyp der Daten (d) codiert wird.

15. Verfahren nach einem der Ansprüche 11 bis 14, bei dem die Daten (d) abhängig von der Zugriffsadresse (a1-an), abhängig von einem Bestandteil der Zugriffsadresse (a0, sf) oder abhängig von einem Zusatz zur Zugriffsadresse (sf) einer bestimmten der Arithmetik/Logik-Einheiten (ALU-L, ALU-R) angelegt werden, wobei die bestimmte der Arithmetik/Logik-Einheiten (ALU-L, ALU-R) zur Verarbeitung des jeweiligen Datentyps der Daten (d) verwendet wird.

16. Verfahren nach einem der Ansprüche 11 bis 15, bei dem die Zugriffsadressen aus einer eigentlichen Speicheradresse (a1 -an) und/oder aus einer zusätzlichen Datentyp-Information als erweiterter Zugriffsadresse (a0, sf) ausgebildet werden.

17. Verfahren nach einem der Ansprüche 11 bis 16, bei dem im Instruktions-Code zum Zuordnen der Daten (d) zu bestimmten Arithmetik/Logik-Einheiten keine vom Datentyp abhängige Zuordnungs-Anweisungsanteile enthalten sind.

18. Verfahren nach einem der Ansprüche 11 bis 17 zum Betreiben einer Prozessorarchitektur nach einem der Ansprüche 1 bis 8 oder zum Betreiben eines Prozessors nach Anspruch 9.

19. Verfahren nach einem der Ansprüche 11 bis 18,
**dadurch gekennzeichnet, dass**
das Verfahren zum Verarbeiten von Audiosignalen eingesetzt wird.

20. Verfahren nach einem der Ansprüche 11 bis 19,
**dadurch gekennzeichnet, dass**
das Laden und Speichern der Daten (d) verdreht erfolgt.

21. Verfahren nach einem der Ansprüche 11 bis 20,
**dadurch gekennzeichnet, dass**
eine Datenkonversion ohne explizite Kodierung in den Instruktionen, welche Lade- oder Speicheranweisungen beinhaltet, stattfindet.

22. Verfahren nach einem der Ansprüche 11 bis 21,
**dadurch gekennzeichnet, dass**
eine Konvertierung der Daten (d) nach Maßgabe von Datentypen erfolgt.
